# EUROPÄISCHE PATENTSCHRIFT

(11) **EP 3 326 015 B1**
(45) Veröffentlichungstag und Bekanntmachung des Hinweises auf die Patenterteilung: **15.04.2020**
(21) Anmeldenummer: 16745411.5
(22) Anmeldetag: 07.07.2016
(51) Int. Cl.: G02B 6/32, G02B 6/38

(54) **OPTISCHER STECKVERBINDER**
OPTICAL CONNECTOR
FICHE OPTIQUE

(30) Priorität: 20.07.2015 DE 102015111705
(43) Veröffentlichungstag der Anmeldung: 30.05.2018
(73) Patentinhaber: HARTING Electronics GmbH, 32339 Espelkamp (DE)
(72) Erfinder: LÜCKEMEIER, Martin, 31603 Diepenau (DE)
(86) Internationale Anmeldenummer: PCT/DE2016/100301
(87) Internationale Veröffentlichungsnummer: WO 2017/012606

(56) Entgegenhaltungen:
- EP-A1- 0 053 914
- DE-A1-102013 105 777
- KR-A- 20110 021 615
- US-A1- 2014 212 096

## Beschreibung

Die Erfindung geht aus von einen optischer Steckverbinder, aufweisend einen ersten Steckerteil und einem damit verrastbaren zweiten Steckerteil, wobei der optische Steckverbinder entlang einer Steckerachse in einem vorderen Bereich einen Steckbereich und in einem hinteren Bereich einen Anschlussbereich aufweist.

Derartige optische Steckverbinder werden benötigt, um eine lösbare Verbindung zwischen zwei optischen Leitern oder Kabeln herzustellen und wieder zu lösen. Die Kopplung zweier optischer Leiter ist sehr aufwändig, da die Verbindung frei von Verunreinigungen sein muss und daher sehr störanfällig ist.

Die Lichtaustritts- und Lichteintrittsflächen der optischen Leiter müssen für eine Kontaktierung äußerst sauber und frei von Verunreinigungen sein. Auch im gesteckten Zustand muss dafür gesorgt werden, dass möglichst keine Verunreinigungen, Feuchtigkeit oder Staub auf die Kontaktstellen kommen. Jegliche Art von Fremdkörper auf der Kopplungsstelle zwischen den Leitern verschlechtert die Übertragungsgenauigkeit des Steckverbinders.

Um den Einfluss von Fremdkörpern auf der Übertragungsstelle zu verringern wird bei optischen Steckverbindern oft mit einer sogenannten Strahlaufweitung gearbeitet. Dabei wird der optische Strahl, der aus dem optischen Leiter austritt mittels einer Linse aufgeweitet. Durch die Linse wird der Durchmesser des Lichtstrahls vergrößert und parallel ausgerichtet. Im Verhältnis zu dem Lichtstrahl mit seinem so gewonnenen, größeren Querschnitt sind Verunreinigungen von kleinen Partikeln kleiner. Der aufgeweitete Lichtstrahl ist somit unempfindlicher gegen Verunreinigungen, Verschmutzung und Feuchtigkeit als der Lichtstrahl in seiner originalen Größe. Daher wird im Bereich der optischen Steckverbinder gerne mit optisch geweiteten Lichtstrahlen gearbeitet.

Aus der DE 10 2013 105 777 A1 ist eine selbstauslösende Steckverbindervorrichtung mit wenigstens einem optischen Leitelement, mit zumindest einer Aufnahme für wenigstens ein Führungselement einer weiteren Steckverbindervorrichtung aufweist. Durch die zumindest eine Aufnahme ist eine Winkelorientierung zu der weiteren Steckverbindervorrichtung festgelegt. Die Steckverbindervorrichtung weist zudem mindestens ein Funktionselement auf, welches durch das wenigstens eine Führungselement zumindest teilweise parallel zu einer Steckrichtung verschiebbar ist. Das Funktionselement ist dazu vorgesehen, wenigstens eine weitere, von dem wenigstens einen optischen Leitelement verschiedene Einheit während eines Einsteck- und/oder während eines Aussteckvorgangs zu betätigen. In einem Ausführungsbeispiel ist das wenigstens ein optisches Leitelement als eine Linse, insbesondere als eine Kugellinse ausgestaltet.

Problematisch bei derartigen Steckverbindern stellen sich die Herstellungsverfahren her. Für die Herstellung von optischen Steckverbindern, die einen optischen Strahl aufweiten, diesen übertragen und wieder bündeln sollen benötigt ein hohes Maß an Genauigkeit. Viele traditionelle Herstellungsverfahren, wie zum Beispiel Spritzgießverfahren, sind hierfür zu ungenau.

Dies rührt vor allem daher, dass im Spritzgießverfahren verschiedene Flächen des hergestellten Gegenstandes in verschiedenen Formteilen vorgesehen sind. Beim Zusammenfügen dieser verschiedenen Formteile treten relativ große Toleranzen auf, welche sich auf den gefertigten Gegenstand übertragen.

### Aufgabenstellung

Die Aufgabe der Erfindung besteht darin, einen optischen Steckverbinder vorzustellen, welcher sehr geringe Toleranzen aufweist und so eine möglichst genaue, verlustfreie und störungsunanfällige Kontaktierung und Übertragung eines optischen Signals ermöglicht. Der Steckverbinder soll ferner aus möglichst wenigen Komponenten bestehen, so dass eine Montage einfach erfolgen kann.

Die Aufgabe wird durch Merkmale des unabhängigen Anspruchs 1 gelöst.

Vorteilhafte Ausgestaltungen der Erfindung sind in den Unteransprüchen angegeben.

Bei der Erfindung handelt es sich um einen optischen Steckverbinder, welcher zweiteilig ist und aus einem ersten Steckerteil und einem zweiten Steckerteil gebildet wird. Die miteinander verrasteten Steckerteile bilden einen, entlang einer Steckerachse vorderen Steckbereich und einen hinteren Anschlussbereich.

Der Steckbereich des optischen Steckverbinders bildet eine optische Linse, sowie eine erste Führung und eine zweite Führung. Dabei sind die erste Führung und die zweite Führung parallel zueinander ausgerichtet. Zur Steckerachse bilden die erste Führung und die zweite Führung einen Winkel größer 0 Grad, so dass die Führungen nicht parallel zur Steckerachse verlaufen.

Der Anschlussbereich des optischen Steckverbinders weist eine Kabelführung, eine Litzenführung und einen Kontaktbereich auf. Dabei sind die Kabelführung und die Litzenführung parallel zueinander ausgerichtet. Gleichzeitig bilden Kabelführung und Litzenführung die Steckerachse. Die Litzenführung schließt sich dabei achssymmetrisch an die Kabelführung, in Richtung Steckseite des Steckverbinders an. An die Litzenführung wiederum grenzt der Kontaktbereich. Der Kontaktbereich bildet gleichzeitig den Übergang zwischen Anschlussbereich und Steckbereich.

Im Anschlussbereich des optischen Steckverbinders kann so ein Kabel in die Kabelführung eingelegt werden. Eine Faser des Kabels wird weiter durch die Litzenführung geführt und endet im Kontaktbereich. Im Kontaktbereich ist ein optisches Koppelgel aufgebracht. Dieses ermöglicht eine vorteilhafte, optische Kopplung der optischen Faser auf die Rückseite der Linse im Steckbereich.

Im Anschlussbereich des optischen Steckverbinders ist in einer vorteilhaften Ausführungsform ein Klemmarm vorgesehen. Der Klemmarm verfügt über zumindest ein Klemmmittel, welches zum Klemmen und Fixieren des Kabels in der Kabelführung vorgesehen ist. Dabei kann der Klemmarm so fixiert werden, dass das Klemmmittel leicht in das Kabel drückt und so eine kraftschlüssige Fixierung des Kabels ermöglicht, indem das Kabel einerseits durch das Klemmmittel gehalten, andererseits durch das Klemmmittel in die Kabelführung gepresst wird.

Der Klemmarm ist vorteilhaft mit einem Filmscharnier am ersten Steckerteil befestigt. Dadurch kann der Klemmarm geöffnet - von der Kabelführung weg bewegt - und geschlossen - zur Kabelführung hin bewegt - werden. Gleichzeitig ist kein zusätzliches Bauteil nötig.

Damit auch die Faser in der Litzenführung korrekt geführt und fixiert werden kann, verfügt der optische Steckverbinder im Anschlussbereich über ein Litzenführungsmittel, welches auf die Litzenführung und eine darin aufgenommene Faser einwirkt. Das Litzenführungsmittel ist dabei federelastisch ausgeführt, so dass es einen Druck auf die Faser eines Kabels ausüben kann und diese so in die Litzenführung drücken und in dieser fixieren kann.

In einer besonders vorteilhaften Ausführungsform ist das Litzenführungsmittel dabei aus einer oder mehreren federelastischen Lamellen gebildet. Durch mehrere Lamellen, die jeweils einen geringen Druck auf die Faser ausüben, wird die Faser so nicht beschädigt und gleichzeitig ein ausreichender Anpressdruck zur Fixierung ausgeübt.

Das Litzenführungsmittel ist vorteilhaft an dem zweiten Steckerteil angeformt, so dass durch verbinden des ersten Steckerteils mit dem zweiten Steckerteil die Litzenführungsmittel auf die Litzenführung am ersten Steckerteil einwirken. Durch diese Anordnung kann ebenso durch ein Lösen des ersten und zweiten Steckerteils voneinander eine Faser zerstörungsfrei entfernt werden, welche im Litzenführungsmittel gehalten ist.

Gemäß der Erfindung ist der Kontaktbereich zur Kontaktierung einer optischen Faser rückseitig das Steckbereich angeordnet. So kann eine optische Faser im Kontaktbereich mit dem ersten Steckerteil in Kontakt gebracht werden. Besonders vorteilhaft ist die Nutzung eines optisch durchlässigen Materials für den ersten Steckerteil. So kann der optische Strahl im ersten Steckerteil weitergeleitet werden und am Steckbereich, welche als Linse ausgebildet ist austreten.

Die Linse im Steckbereich des ersten Steckerteils ist so ausgebildet, dass der optische Strahl parallel, aufgeweitet aus dem ersten Steckerteil austritt. Dabei tritt der Strahl unter einem Winkel, der dem Winkel des ersten Führung und der zweiten Führung entspricht, zur Steckerachse aus der Linse aus. Somit verläuft der parallele, aufgeweitete Strahl parallel zu der ersten und zweiten Führung. Dadurch ist eine genaue Steckung zweier Steckverbinder möglich, ohne Verluste zwischen den beiden Linsen zu erhalten.

Die Erfindung ist besonders vorteilhaft für eine passgenaue Steckung ohne Verluste geeignet, da die optische Linse, die erste und zweite Führung, die Litzenführung und der Kontaktbereich einstückig im ersten Steckerteil vereint sind. Dabei besteht das erste Steckerteil aus einem optisch durchlässigen und leitfähigen Material. Der Brechungsindex des Materials sollte bei größer 1 liegen, d.h. eine größere Brechung als Luft haben. Vorzugsweise ist hier ein optisch durchlässiges Polymer zu nutzen. All diese Bestandteile sind für eine genaue Ausrichtung des optischen Strahls wichtig. So ist eine Herstellung in einem Spritzgussvorgang möglich, welcher eine besonders hohe Genauigkeit der besagten Bestandteile zueinander ermöglicht.

Um die Genauigkeit der Bestandteile des ersten Steckerteils zueinander noch besser herstellen zu können, ist es besonders vorteilhaft die optische Linse, die erste Führung, die zweite Führung, die Litzenführung und den Kontaktbereich von einer Richtung zugänglich zu gestalten, so dass diese von der gleichen Richtung in einem Spritzgussverfahren entformbar sind. So kann eine noch größere Genauigkeit erzielt werden.

Der optische Steckverbinder ist vorzugsweise als hermaphroditischer Steckverbinder ausgebildet. Dazu sind im Steckbereich zwei Rastnasen vorgesehen. Eine erste Rastnase ist an einem Federarm ausgebildet und eine zweie Rastnase direkt am Steckbereich des ersten Steckerteils. Dabei ist die erste Rastnase korrespondierend zur zweiten Rastnase vorgesehen. Das heißt, dass die erste Rastnase eines ersten optischen Steckverbinders und die zweite Rastnase eines zweiten Steckverbinders ineinander greifen. So können zwei identische Steckverbinder um 180° zueinander gedreht miteinander verbunden werden.

Gleichzeitig sind die erste Führung und die zweite Führung im Steckbereich miteinander korrespondierend ausgeführt. Das heißt, dass die erste Führung eines ersten Steckverbinders in der zweiten Führung eines zweiten Steckverbinders geführt wird. Da die Führungen und der aufgeweitete Lichtstrahl parallel zueinander verlaufen ist die Einstecktiefe der beiden optischen Steckverbinder zueinander irrelevant. Die Signalübertragung kann auf Grund der genauen Toleranzen zwischen Linse und Führung immer in gleicher Qualität erfolgen. Durch den aufgeweiteten Strahl ist die Übertragung zudem weniger anfällig für Verschmutzungen und Umwelteinflüsse.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines ersten Steckerteils;
- Fig. 2: eine Explosionsansicht eines optischen Steckverbinders;
- Fig. 3: einen optischen Steckverbinder;
- Fig. 4: einen optischen Steckverbinder mit angeschlossenem Kabel in einer Schnittdarstellung;
- Fig. 5: einen optischen Steckverbinder mit angeschlossenem Kabel in einer weiteren Schnittdarstellung; und
- Fig. 6: eine Schnittdarstellung zweier, kontaktierter optischer Steckverbinder.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

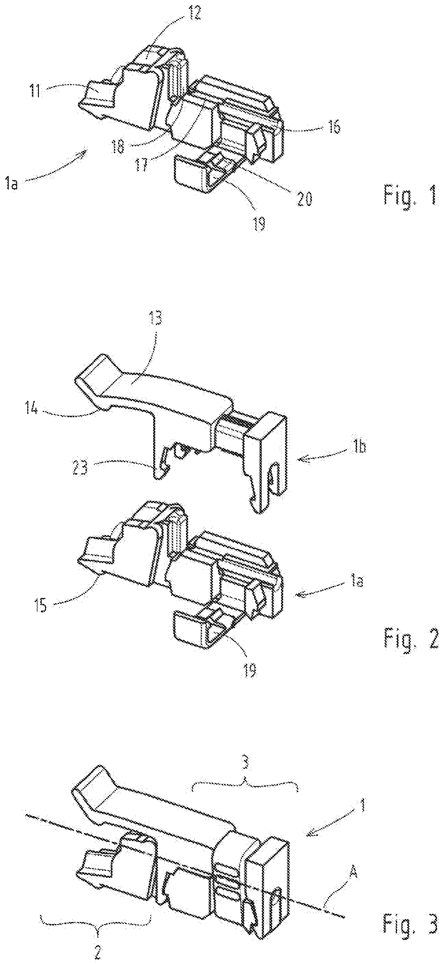

Die Figur 1 zeigt eine perspektivische Darstellung eines ersten Steckerteils 1a eines optischen Steckverbinders 1 nach der vorliegenden Erfindung. Dabei wird der erste Steckerteil 1a einteilig aus einem optisch durchlässigen und leitfähigen Polymer hergestellt. Der erste Steckerteil bildet eine erste Führung 11 sowie eine zweite Führung 12. Die erste Führung 11 und die zweite Führung 12 sind parallel zueinander angeordnet und befinden sich in einem Steckbereich 2 des Steckverbinders 1.

Rückseitig, in einem Anschlussbereich 3 des Steckverbinders 1 weist das erste Steckerteil 1a einen Kontaktbereich 18 auf. Direkt im Anschluss an den Kontaktbereich 18 erstreckt sich eine Litzenführung 17 und eine sich daran anschließende Kabelführung 16.

Seitlich der Kabelführung 16 ist über ein Filmscharnier 21 ein Klemmarm 19 an dem ersten Steckerteil 1a angeformt. Der Klemmarm 19 ist über das Filmscharnier 21 beweglich mit dem Steckerteil 1a verbunden. Am Klemmarm 19 ist ein Klemmmittel 20 zum ersten Steckerteil 1a weisend angeformt.

In der Figur 2 ist ein erstes Steckerteil 1a mit einem zweiten Steckerteil 1b in einer Explosionsdarstellung gezeigt. Das zweite Steckerteil 1b verfügt über vier Rastarme 23 mit welchen das zweite Steckerteil 1b auf dem ersten Steckerteil 1a verrastbar ist.

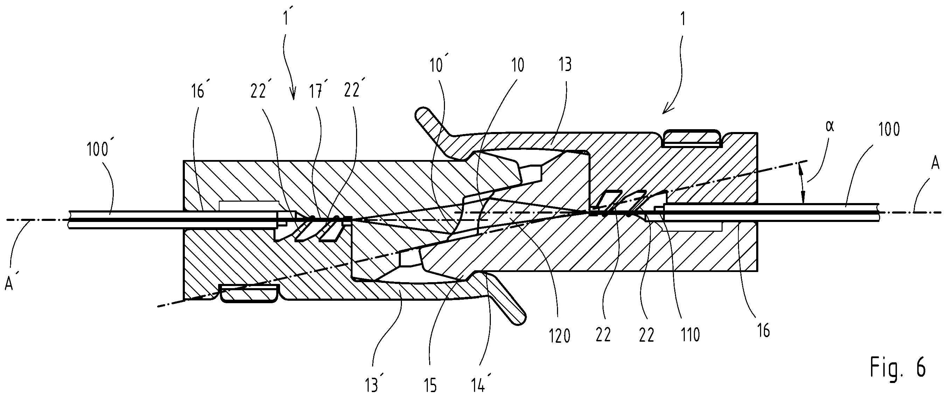

Im Bereich der Führungen 11, 12 verfügt das erste Steckerteil 1a über eine zweite Rastnase 15. Diese ist korrespondierend zu einer ersten Rastnase 14 ausgebildet. Die erste Rastnase 14 ist dabei an einem Federarm 13 vorgesehen. Die Rastnasen 14, 15 zweier Steckverbinder 1 können so hermaphroditisch miteinander verrasten, wie in Figur 6 dargestellt.

Ein Steckverbinder 1 ist in der Figur 3 gezeigt. Der zweite Steckerteil 1b ist auf dem ersten Steckerteil 1a verrastet. Der linke Bereich bildet einen Steckbereich 2 an welchen sich in Steckerachse A ein Anschlussbereich 3 anschließt. Der Steckbereich 2 ist zum Kontaktieren eines zweiten Steckverbinders 1 vorgesehen, wobei der Anschlussbereich 3 zum Anschluss eines Kabels 100 ausgebildet ist. Der Klemmarm 19 ist über den zweiten Steckerteil 1b gelegt um diesen am ersten Steckerteil 1a zu halten.

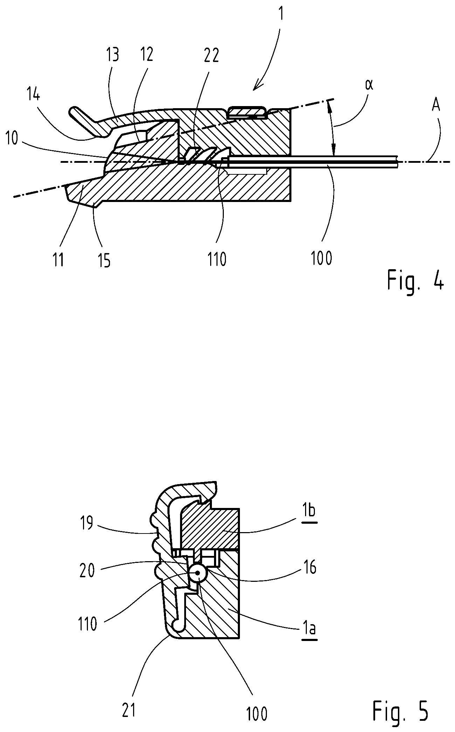

In der Figur 4 ist ein Steckverbinder 1 mit angeschlossenem Kabel 100 in einer Schnittdarstellung entlang der Steckerachse A dargestellt. Im vorderen, links dargestellten Steckbereich ist der Federarm 13 mit angeformter, erster Rastnase 14 zu erkennen. Die erste Rastnase 14 ist korrespondierend zur zweiten Rastnase 15 ausgebildet (siehe Figur 6).

Zwischen dem Federarm 13 und der zweiten Rastnase 15 sind die erste Führung 11 und die zweite Führung 12 angeordnet. Die Führungen 11, 12 sind in einem Winkel α zur Steckerachse A ausgerichtet. Zwischen der ersten Führung 11 und der zweiten Führung 12 ist die Linse 10 am ersten Steckerteil 1a ausgebildet. Die Linse 10 ist so vorgesehen, dass ein austretender Lichtstrahl 120 parallel zur ersten Führung 11 und zweiten Führung 12 verläuft. Durch die Anordnung der Bestandteile in einem Winkel ist es möglich den gesamten erste Steckerteil 1a von einer Richtung (hier oben) aus einem Spritzgusswerkzeug zu entformen. Dies ist für besonders kleine Toleranzen notwendig.

Im hinteren Anschlussbereich 3 des Steckverbinders 1 ist ein Kabel 100 in die Kabelführung 16 des Steckverbinders 1 eingeführt. Hier wird das Kabel 100 mittels des Klemmmittels 20 fixiert. Die im Kabel 100 verlaufende optische Faser 110 ist am freien Ende in der Litzenaufnahme 17 mittels der Litzenführungsmittel 22 gehalten.

Ein weiterer Querschnitt des Steckverbinders 1 ist in der Figur 5 dargestellt. Hier verläuft der Schnitt quer zur Steckerachse A. Erkennbar ist der Klemmarm 19, welcher über den zweiten Steckerteil 1b greift und diesen so sichert. Beweglich ist der Klemmarm 19 über das Filmscharnier 21 am ersten Steckerteil 1a angeformt. Durch das Klemmmittel 20 wird das Kabel 100 in der Kabelführung 16 des Steckverbinders 1 gehalten und fixiert.

Die Figur 6 zeigt zwei identische, miteinander verbundene Steckverbinder 1, 1' nach der vorliegenden Erfindung in einer Schnittdarstellung. In beiden Steckverbindern 1, 1' ist im Anschlussbereich 3, 3' jeweils ein Kabel 100, 100' in den Steckverbinder 1, 1' eingeführt und in der Kabelführung 16, 16' fixiert. Erkennbar sind auch die Litzenführungsmittel 22, 22' welche die optischen Fasern 110, 110' der Kabel 100, 100' in der Litzenführungen 17, 17' fixieren.

Die Steckbereiche 2, 2' der Steckverbinder 1, 1' sind miteinander verrastet. Jeweils die erste Rastnase 14, 14' verrastet mit der jeweils zweiten Rastnase 15', 15. Ebenso sind die ersten Führungen 11, 11' auf der jeweils zweiten Führungen 12', 12 geführt. Parallel zu den Führungen 11, 11', 12, 12' verläuft ein optischer Strahl 120.

Der optische Strahl 120 wird durch die erfindungsgemäße Anordnung der Linsen 10, 10' im selben Winkel α abgelenkt wie die Führungen 11, 11', 12, 12' verlaufen. Dadurch wird ein Ausgleich der Stecktiefe der beiden Steckverbinder 1, 1' zueinander ermöglicht.

### Optischer Steckverbinder

### Bezugszeichenliste

- 1: optischer Steckverbinder
- 1a: erster Steckerteil
- 1 b: zweiter Steckerteil
- 2: Steckbereich
- 3: Anschlussbereich

- 10: Linse
- 11: erste Führung
- 12: zweite Führung
- 13: Federarm
- 14: erste Rastnase
- 15: zweite Rastnase
- 16: Kabelführung
- 17: Litzenführung
- 18: Kontaktbereich
- 19: Klemmarm
- 20: Klemmmittel
- 21: Filmscharnier
- 22: Litzenführungsmittel
- 23: Rastarme

- 100: Kabel
- 110: optische Faser
- 120: optischer Strahl

- A: Steckerachse
- α: Winkel

## Patentansprüche

1. Optischer Steckverbinder (1), aufweisend einen ersten Steckerteil (1a) und einem damit verrastbaren zweiten Steckerteil (1b),
wobei der optische Steckverbinder (1) entlang einer Steckerachse (A) in einem vorderen Bereich einen Steckbereich (2) und in einem hinteren Bereich einen Anschlussbereich (3) aufweist,
wobei im Steckbereich (2) eine optische Linse (10), eine erste Führung (11), sowie eine zweite Führung (12) ausgebildet sind,
wobei die erste Führung (11) und die zweite Führung (12) parallel ausgerichtet sind und in einem Winkel (α) größer 0° zur Steckerachse (A) angeordnet sind
wobei im Anschlussbereich (3) eine Kabelführung (16), eine Litzenführung (17) und ein Kontaktbereich (18) ausgebildet sind, wobei der Kontaktbereich (18) rückseitig des Steckbereichs (2) angeordnet ist und zur Aufnahme eines freien Endes einer optischen Faser (110) eines Kabels (100) vorgesehen ist und wobei die Linse (10) so ausgebildet ist, dass ein im Kontaktbereich (18) parallel zur Steckerachse (A) eintretender optischer Strahl (120) an der Linse (10) parallel zur ersten Führung (11) und zur zweiten Führung (12) austritt.

2. Optischer Steckverbinder (1) nach vorstehendem Anspruch,
**dadurch gekennzeichnet, dass**
die Kabelführung (16) und die Litzenführung (17) parallel zur Steckerachse (A) ausgerichtet sind.

3. Optischer Steckverbinder (1) nach einem der Ansprüche 1 bis 2,
**dadurch gekennzeichnet, dass**
im Anschlussbereich (3) zumindest ein Klemmarm (19) mit Klemmmittel (20) ausgebildet ist,
wobei das Klemmmittel (20) auf ein in der Kabelführung (16) geführtes Kabel (100) einwirkt.

4. Optischer Steckverbinder (1) nach vorstehendem Anspruch,
**dadurch gekennzeichnet, dass**
der Klemmarm (19) mit einem Filmscharnier (21) am ersten Steckerteil (1a) befestigt ist.

5. Optischer Steckverbinder (1) nach einem der Ansprüche 1 bis 4,
**dadurch gekennzeichnet, dass**
im Bereich der Litzenführung (17) des Anschlussbereiches (3) zumindest ein Litzenführungsmittel (22) ausgebildet ist.

6. Optischer Steckverbinder (1) nach vorstehendem Anspruch,
**dadurch gekennzeichnet, dass**
das Litzenführungsmittel (22) federelastisch auf die Litzenführung (17) einwirkt.

7. Optischer Steckverbinder (1) nach einem der Ansprüche 5 oder 6,
**dadurch gekennzeichnet, dass**
das Litzenführungsmittel (22) am zweiten Steckerteil (1b) angeformt ist.

8. Optischer Steckverbinder (1) nach einem der Ansprüche 5 bis 7,
**dadurch gekennzeichnet, dass**
das Litzenführungsmittel (22) aus elastischen Lamellen gebildet ist.

9. Optischer Steckverbinder (1) nach einem der Ansprüche 1 bis 8,
**dadurch gekennzeichnet, dass**
im Kontaktbereich (18) ein optisches Koppelgel angeordnet ist.

10. Optischer Steckverbinder (1) nach einem der Ansprüche 1 bis 9,
**dadurch gekennzeichnet, dass**
die optische Linse (10), die erste Führung (11), die zweite Führung (12), die Litzenführung (17) und der Kontaktbereich (18) einstückig im ersten Steckerteil (1a) eingeformt sind.

11. Optischer Steckverbinder (1) nach vorstehendem Anspruch,
**dadurch gekennzeichnet, dass**
der erste Steckerteil (1a) aus einem optisch durchlässigen Polymer besteht.

12. Optischer Steckverbinder (1) nach einem der beiden vorstehenden Ansprüche,
**dadurch gekennzeichnet, dass**
die optische Linse (10), die erste Führung (11), die zweite Führung (12), die Litzenführung (17) und der Kontaktbereich (18) von einer Richtung zugänglich und von dieser Richtung in einem Spritzgussverfahren entformbar sind.

13. Optischer Steckverbinder (1) nach einem der vorstehenden Ansprüche,
**dadurch gekennzeichnet, dass**
im Steckbereich (2) ein Federarm (13) mit einer ersten Rastnase (14) ausgebildet ist und eine zweite Rastnase (15) ausgebildet ist.

14. Optischer Steckverbinder (1) nach vorstehendem Anspruch,
**dadurch gekennzeichnet, dass**
die erste Rastnase (14) korrespondierend zur zweiten Rastnase (15) ausgebildet ist.

15. Optischer Steckverbinder (1) nach einem der vorstehenden Ansprüche,
**dadurch gekennzeichnet, dass**
der optische Steckverbinder (1) hermaphroditisch ausgebildet ist.

16. Optischer Steckverbinder (1) nach vorstehendem Anspruch,
**dadurch gekennzeichnet, dass**
die erste Führung (11) korrespondierend zur zweiten Führung (12) ausgebildet ist.

17. Optischer Steckverbinder (1) nach einem der vorstehenden Ansprüche,
**dadurch gekennzeichnet, dass**
der Winkel (α) größer 0° und kleiner 45° ist.

18. Optischer Steckverbinder (1) nach einem der vorstehenden Ansprüche,
**dadurch gekennzeichnet, dass**
der erste Steckerteil (1a) und der zweite Steckerteil (1b) einstückig ausgeführt sind.

19. Optischer Steckverbinder (1) nach vorstehendem Anspruch,
**dadurch gekennzeichnet, dass**
der zweite Steckerteil (1b) am Klemmarm (19) des ersten Steckerteils (1a) angeformt ist.

## Claims

1. An optical plug-in connector (1), having a first plug part (1a) and a second plug part (1b) which can be latched to said first plug part,
wherein the optical plug-in connector (1) has, along a plug axis (A), a plug-in region (2) in a front region and a connection region (3) in a rear region,
wherein an optical lens (10), a first guide (11) and also a second guide (12) are formed in the plug-in region (2),
wherein the first guide (11) and the second guide (12) are oriented in parallel and are arranged at an angle (α) of greater than 0° in relation to the plug axis (A),
wherein a cable guide (16), a braid guide (17) and a contact region (18) are formed in the connection region (3),
wherein the contact region (18) is arranged on the rear side of the plug-in region (2) and is intended to receive a free end of an optical fiber (110) of a cable (100), and
wherein the lens (10) is formed such that an optical beam (120) which enters the contact region (18) parallel in relation to the plug axis (A) exits from the lens (10) parallel in relation to the first guide (11) and in relation to the second guide (12).

2. The optical plug-in connector (1) as claimed in the preceding claim,
**characterized in that**
the cable guide (16) and the braid guide (17) are oriented parallel in relation to the plug axis (A).

3. The optical plug-in connector (1) as claimed in either of claims 1 and 2,
**characterized in that**
at least one clamping arm (19) with clamping means (20) is formed in the connection region (3),
wherein the clamping means (20) acts on a cable (100) which is guided in the cable guide (16).

4. The optical plug-in connector (1) as claimed in the preceding claim,
**characterized in that**
the clamping arm (19) is fastened to the first plug part (1a) by way of a film hinge (21).

5. The optical plug-in connector (1) as claimed in one of claims 1 to 4,
**characterized in that**
at least one braid guide means (22) is formed in the region of the braid guide (17) of the connection region (3) .

6. The optical plug-in connector (1) as claimed in the preceding claim,
**characterized in that**
the braid guide means (22) acts on the braid guide (17) with a spring-elastic action.

7. The optical plug-in connector (1) as claimed in either of claims 5 and 6,
**characterized in that**
the braid guide means (22) is integrally formed on the second plug part (1b).

8. The optical plug-in connector (1) as claimed in one of claims 5 to 7,
**characterized in that**
the braid guide means (22) is formed from elastic lamellae.

9. The optical plug-in connector (1) as claimed in one of claims 1 to 8,
**characterized in that**
an optical coupling gel is arranged in the contact region (18).

10. The optical plug-in connector (1) as claimed in one of claims 1 to 9,
**characterized in that**
the optical lens (10), the first guide (11), the second guide (12), the braid guide (17) and the contact region (18) are integrally formed in the first plug part (1a).

11. The optical plug-in connector (1) as claimed in the preceding claim,
**characterized in that**
the first plug part (1a) is composed of an optically transmissive polymer.

12. The optical plug-in connector (1) as claimed in either of the two preceding claims,
**characterized in that**
the optical lens (10), the first guide (11), the second guide (12), the braid guide (17) and the contact region (18) are accessible from one direction and can be removed from a mold from this direction in the injection-molding process.

13. The optical plug-in connector (1) as claimed in one of the preceding claims,
**characterized in that**
a spring arm (13) with a first latching lug (14) is formed, and a second latching lug (15) is formed in the plug-in region (2).

14. The optical plug-in connector (1) as claimed in the preceding claim,
**characterized in that**
the first latching lug (14) is designed in a corresponding manner to the second latching lug (15).

15. The optical plug-in connector (1) as claimed in one of the preceding claims,
**characterized in that**
the optical plug-in connector (1) is of hermaphroditic design.

16. The optical plug-in connector (1) as claimed in the preceding claim,
**characterized in that**
the first guide (11) is designed in a corresponding manner to the second guide (12).

17. The optical plug-in connector (1) as claimed in one of the preceding claims,
**characterized in that**
the angle (α) is greater than 0° and smaller than 45°.

18. The optical plug-in connector (1) as claimed in one of the preceding claims,
**characterized in that**
the first plug part (1a) and the second plug part (1b) are of integral design.

19. The optical plug-in connector (1) as claimed in the preceding claim,
**characterized in that**
the second plug part (1b) is. integrally formed on the clamping arm (19) of the first plug part (1a).

## Revendications

1. Connecteur optique enfichable (1), présentant une première partie de connecteur (1a) et une deuxième partie de connecteur (1b) pouvant être encliquetée avec celle-ci, le connecteur optique enfichable (1) présentant, le long d'un axe d'enfichage (A) dans une région avant, une région d'enfichage (2) et, dans une région arrière, une région de raccordement (3), une lentille optique (10), un premier guide (11) ainsi qu'un deuxième guide (12) étant réalisés dans la région d'enfichage (2), le premier guide (11) et le deuxième guide (12) étant orientés parallèlement et étant disposés suivant un angle (α) supérieur à 0° par rapport à l'axe d'enfichage (A),
un guide de câble (16), un guide de brin (17) et une région de contact (18) étant réalisés dans la région de raccordement (3),
la région de contact (18) étant disposée du côté arrière de la région d'enfichage (2) et étant prévue pour recevoir une extrémité libre d'une fibre optique (110) d'un câble (100) et
la lentille (10) étant réalisée de telle sorte: qu'un faisceau optique (120) entrant dans la région de contact (18) parallèlement à l'axe d'enfichage (A) ressorte au niveau de la lentille (10) parallèlement au premier guide (11) et au deuxième guide (12).

2. Connecteur optique enfichable (1) selon la revendication précédente,
**caractérisé en ce que**
le guide de câble (16) et le guide de brin (17) sont orientés parallèlement à l'axe d'enfichage (A) .

3. Connecteur optique enfichable (1) selon l'une quelconque des revendications 1 et 2,
**caractérisé en ce que**
au moins un bras de serrage (19) avec un moyen de serrage (20) est réalisé dans la région de raccordement (3),
le moyen de serrage (20) agissant sur un câble (100) guidé dans le guide de câble (16).

4. Connecteur optique enfichable (1) selon la revendication précédente,
**caractérisé en ce que**
le bras de serrage (19) est fixé à la première partie de connecteur (1a) avec une charnière à film (21).

5. Connecteur optique enfichable (1) selon l'une quelconque des revendications 1 à 4,
**caractérisé en ce que**
au moins un moyen de guidage de brin (22) est réalisé dans la région du guide de brin (17) de la région de raccordement (3).

6. Connecteur optique enfichable (1) selon la revendication précédente,
**caractérisé en ce que**
le moyen de guidage de brin (22) agit de manière élastique à ressort sur le guide de brin (17).

7. Connecteur optique enfichable (1) selon l'une quelconque des revendications 5 et 6,
**caractérisé en ce que**
le moyen de guidage de brin (22) est façonné sur la deuxième partie de connecteur (1b).

8. Connecteur optique enfichable (1) selon l'une quelconque des revendications 5 à 7,
**caractérisé en ce que**
le moyen de guidage de brin (22) est formé de lamelles élastiques.

9. Connecteur optique enfichable (1) selon l'une quelconque des revendications 1 à 8,
**caractérisé en ce que**
un gel de couplage optique est disposé dans la région de contact (18).

10. Connecteur optique enfichable (1) selon l'une quelconque des revendications 1 à 9,
**caractérisé en ce que**
la lentille optique (10), le premier guide (11), le deuxième guide (12), le guide de brin (17) et la région de contact (18) sont formés d'une seule pièce dans la première partie de connecteur (1a).

11. Connecteur optique enfichable (1) selon la revendication précédente,
**caractérisé en ce que**
la première partie de connecteur (1a) se compose d'un polymère optiquement transparent.

12. Connecteur optique enfichable (1) selon l'une quelconque des deux revendications précédentes,
**caractérisé en ce que**
la lentille optique (10), le premier guide (11), le deuxième guide (12), le guide de brin (17) et la région de contact (18) peuvent être accessibles depuis une direction et peuvent être démoulés depuis cette direction dans un procédé de moulage par injection.

13. Connecteur optique enfichable (1) selon l'une quelconque des revendications précédentes,
**caractérisé en ce que**
dans la région d'enfichage (2) un bras de ressort (13) est réalisé avec un premier ergot d'encliquetage (14), et un deuxième ergot d'encliquetage (15) est réalisé.

14. Connecteur optique enfichable (1) selon la revendication précédente,
**caractérisé en ce que**
le premier ergot d'encliquetage (14) est réalisé de manière correspondant au deuxième ergot d'encliquetage (15).

15. Connecteur optique enfichable (1) selon l'une quelconque des revendications précédentes,
**caractérisé en ce que**
le connecteur optique enfichable (1) est réalisé de manière hermaphrodite.

16. Connecteur optique enfichable (1) selon la revendication précédente,
**caractérisé en ce que**
le premier guide (11) est réalisé de manière correspondant au deuxième guide (12).

17. Connecteur optique enfichable (1) selon l'une quelconque des revendications précédentes,
**caractérisé en ce que**
l'angle (α) est supérieur à 0° et inférieur à 45°.

18. Connecteur optique, enfichable (1) selon l'une quelconque des revendications précédentes,
**caractérisé en ce que**
la première partie de connecteur (1a) et la deuxième partie de connecteur (1b) sont réalisées d'une seule pièce.

19. Connecteur optique enfichable (1) selon la revendication précédente,
**caractérisé en ce que**
la deuxième partie de connecteur (1b) est façonnée au niveau du bras de serrage (19) de la première partie de connecteur (1a).
